# EUROPÄISCHE PATENTSCHRIFT

(11) **EP 0 699 851 B1**
(45) Veröffentlichungstag und Bekanntmachung des Hinweises auf die Patenterteilung: **25.11.1998**
(21) Anmeldenummer: 95113413.9
(22) Anmeldetag: 26.08.1995
(51) Int. Cl.: F16H 61/12

(54) **Automatgetriebe mit Notlauf**
Automatic transmission with emergency operating mode
Transmission automatique avec mode de fonctionnement de secours

(30) Priorität: 01.09.1994 DE 4431073
(43) Veröffentlichungstag der Anmeldung: 06.03.1996
(73) Patentinhaber: ZF FRIEDRICHSHAFEN Aktiengesellschaft, 88038 Friedrichshafen (DE)
(72) Erfinder: Matzenbacher, Jürgen, D-66292 Riegelsberg (DE)

(56) Entgegenhaltungen:
- EP-A- 0 354 006
- US-A- 5 129 287
- US-A- 5 233 890
- US-A- 5 251 091

## Beschreibung

Die Erfindung betrifft ein Automatgetriebe, bei dem ein elektronisches Steuergerät aufgrund von Eingangssignalen den fehlerfreien Zustand der im Kraftfluß liegenden Kupplungen/Bremsen überwacht. Bei Fehlererkennung werden nur noch diejenigen Übersetzungen zugelassen, bei denen keine fehlerbehaftete Kupplung/Bremse aktiviert ist.

Bei Automatgetrieben ist es allgemein üblich, deren Funktion zu überwachen. So schlägt z. B. die US-A-5,129,287 vor, die im Kraftfluß liegenden Kupplungen/ Bremsen zu überwachen, indem eine Getriebeeingangsdrehzahl mit dem Produkt aus Getriebeausgangsdrehzahl und dem aktuellen Übersetzungsverhältnis verglichen wird. Wird z. B. im ersten Gang ein Fehler erkannt, so stellt die elektronische Getriebe steuerung über eine entsprechende Kupplungs-/Brems-Kombination eine Zwischenübersetzung des ersten Ganges ein. Mit anderen Worten: Bei Fehlererkennung werden innerhalb eines Ganges nur noch diejenigen Zwischenübersetzungen zugelassen, bei denen keine fehlerbehaftete Kupplung/Bremse aktiviert ist. Der genannte Stand der Technik weist den Nachteil auf, daß bei einem Ausfall der Eingangs kupplung dies dennoch zu einem "Liegenbleiber" führt.

Die der Erfindung zugrunde liegende Aufgabe besteht insofern darin, für ein Automatgetriebe eine Notlaufeinrichtung zu schaffen.

Die Aufgabe wird erfindungsgemäß gelöst, indem bei Fehlererkennung einer auf einer Getriebeeingangswelle angeordneten ersten Kupplung mittels einer zusätzlichen Einrichtung die elektromagnetischen Stellglieder einer zur ersten parallelen zweiten Kupplung aktiviert werden. Erfindungsgemäß ist hierbei die zusätzliche Einrichtung als Schalter, Transistor oder als Relais ausgeführt. Die erfindungsgemäße Lösung bietet den Vorteil, daß bei einem Ausfall der ersten Kupplung, diese ist im Gang eins und drei aktiv, das Fahrzeug im zweiten Gang in die nächste Werkstatt gefahren werden kann. Ein sogenannter "Liegenbleiber" wird hierdurch wirksam verhindert.

In einer Ausgestaltung hierzu wird vorgeschlagen, daß die zusätzliche Einrichtung mittels eines elektronischen Diagnosegeräts schaltbar ist. Diese Ausgestaltung bietet den Vorteil, daß nur autorisierte Fachleute, z. B. Servicetechniker, die Notlaufeinrichtung aktivieren können. Einem Mißbrauch durch den Fahrer kann somit vorgebeugt werden.

In der Zeichnung sind die Ausführungsbeispiele dargestellt.

Es zeigen:
- Fig. 1: ein Getriebeschema mit Kupplungslogik und
- Fig. 2: ein Blockschaltbild.

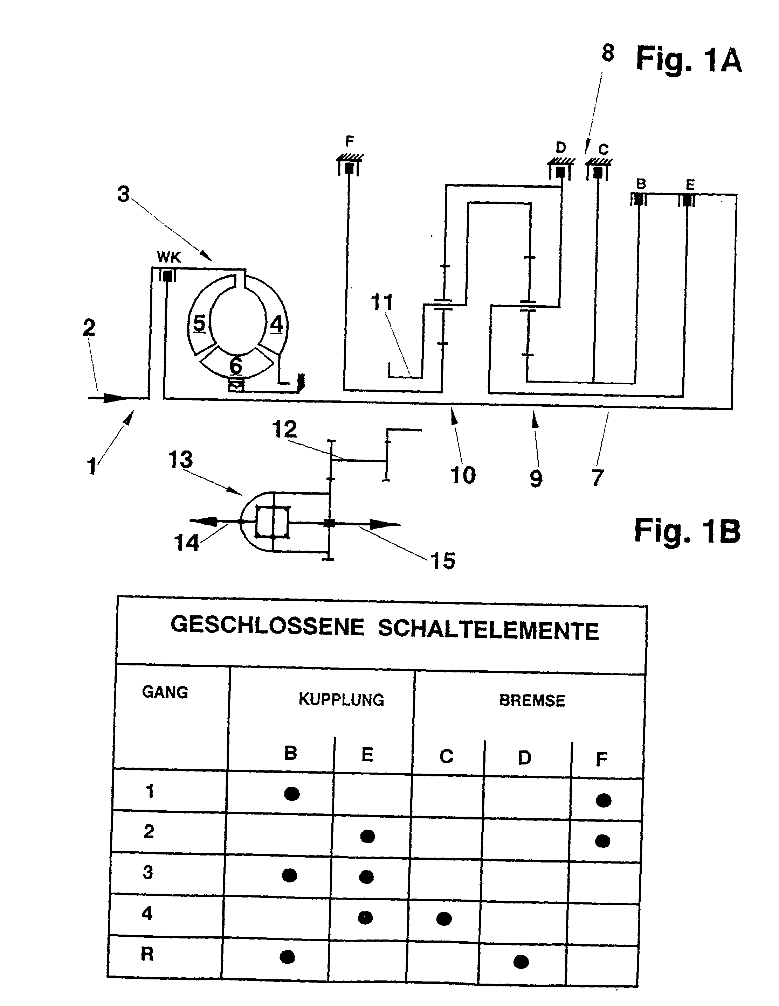

Fig. 1A zeigt ein Getriebeschema eines Automatgetriebes und Fig. 1B eine Tabelle der Kupplungslogik zu dem Automatgetriebe aus Fig. 1A. Das Automatgetriebe 1 besteht aus einem hydrodynamischen Wandler 3, einem zusammengesetzten Planetenschaltgetriebe 8 und einem Differential 13. Angetrieben wird das Automatgetriebe 1 durch eine Antriebswelle 2, dies kann zum Beispiel die Kurbelwelle einer nicht dargestellten Brennkraftmaschine sein. Die Antriebswelle 2 treibt den hydrodynamischen Wandler 3 an. Dieser besteht bekanntermaßen aus einem Pumpenrad 4, einem Turbinenrad 5 und einem Leitrad 6. Der Abtrieb des hydrodynamischen Wandlers erfolgt über das Turbinenrad 5 auf eine Getriebeeingangswelle 7. Parallel zum hydrodynamischen Wandler 3 kann sich, wie in Fig. 1A dargestellt, eine Wandlerüberbrückungskupplung befinden. Die Getriebeeingangswelle 7 führt auf eine erste Kupplung B und eine zweite Kupplung E. Die beiden Kupplungen B und E sind die Eingangskupplungen des zusammengesetzten Planetenschaltgetriebes 8. Dieses setzt sich zusammen aus einem ersten Planetenradsatz 9 und einem zweiten Planetenradsatz 10 und drei Bremsen C, D und F. Der Abtrieb erfolgt über die Welle 11 des zusammengesetzten Planetenschaltgetriebes 8 auf die Welle 12 und weiter auf das Differential 13 und die beiden Achshalbwellen 14 und 15.

Wie aus Fig. 1B ersichtlich, ist im ersten Gang die erste Kupplung B und die dritte Bremse F geschlossen. Im zweiten Gang ist die zweite Kupplung E und die dritte Bremse F geschlossen. Wie aus der Tabelle weiter ersichtlich, kann bei Ausfall der ersten Kupplung B durch eine Aktivierung der zweiten Kupplung E der zweite Gang eingelegt werden. Diese Gangstufe steht somit für den Notlauf zur Verfügung. Ist die hydraulische Steuerung zum Beispiel so ausgeführt, daß die Kupplung E stromlos geschlossen ist, so kann durch eine zusätzliche Einrichtung die Bremse F und C aktiviert werden. Hierdurch ist es zum Beispiel möglich, im Notlauf eine Schaltung vom zweiten in den vierten Gang auszuführen.

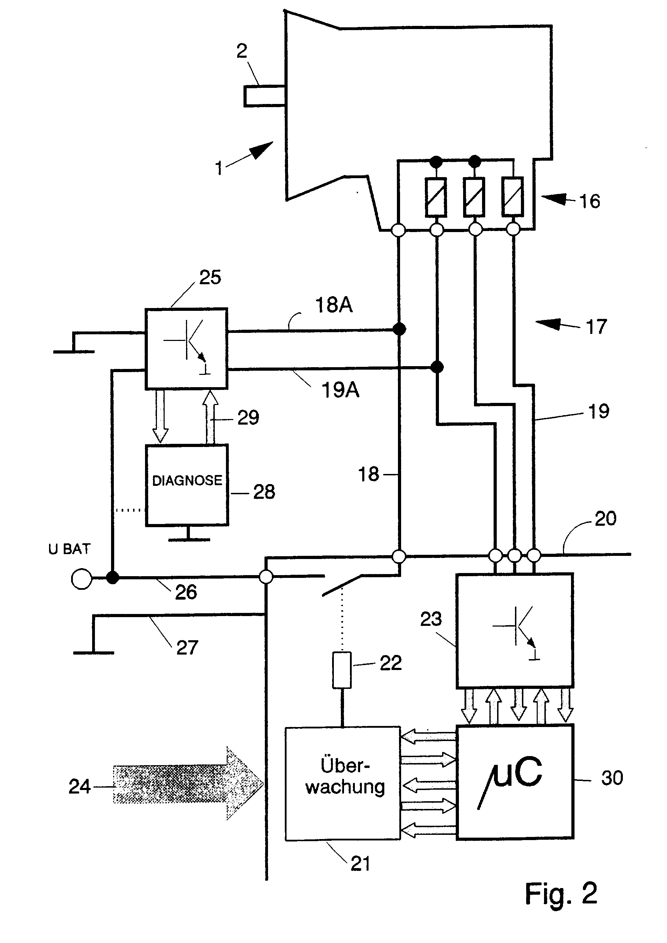

Fig. 2 zeigt ein Blockschaltbild eines automatischen Getriebes 1 mit einem elektronischen Steuergerät 20. Das Automatgetriebe 1 wird über eine Antriebswelle 2 zum Beispiel von einer nicht dargestellten Brennkraftmaschine angetrieben. Im Automatgetriebe 1 befinden sich elektromagnetische Stellglieder 16. Über diese elektromagnetischen Stellglieder 16 werden die Kupplungen und Bremsen des Automatgetriebes 1 gesteuert. Die elektromagnetischen Stellglieder 16 wiederum werden von einem elektronischen Steuergerät 20 gesteuert. Das elektronische Steuergerät 20 zeigt gemäß Fig. 2 einen Micro-Controller 30, einen Funktionsblock Endstufen 23 und und einen Funktionsblock Überwachung 21 mit einem dazugehörigen Sicherungsrelais 22. An das elektronische Steuergerät 20 angeschlossen sind eine Leitung U-Bat 26, eine Leitung Masse 27 und Eingangsgrößen 24. Die Eingangsgrößen 24 können zum Beispiel sein das Signal einer Drosselklappe, eine Drehzahl einer Brennkraftmaschine, eine Getriebeausgangsdrehzahl und die Temperatur eines Hydraulikmediums des Automatgetriebes. Wie in Fig. 2 dargestellt, sind die elektromagnetischen Stellglieder 16 an einer gemeinsamen Plusleitung 18. Die Aktivierung der elektromagnetischen Stellglieder erfolgt über den Funktionsblock Endstufen 23 mittels Rückleitungen 19. Die Plusleitung 18 und Rückleitungen 19 sind in einem Kabelbaum 17 untergebracht.
Weiter ist in Fig. 2 eine Zusatzeinrichtung 25 dargestellt, welche über eine Leitung 18A mit der Plusleitung 18 der elektromagnetischen Stellglieder 16 und über eine Leitung 19A mit einer Rückleitung 19 verbunden ist. Die Zusatzeinrichtung 25 ist mittels eines bi-direktionalen Datenbusses 29 mit einem Diagnosegerät 28 verbunden. Die Funktion der Anordnung ist folgende:
Erkennt der Micro-Controller 30 aufgrund der Eingangsgrößen 24 einen Fehler der ersten Kupplung B, so teilt der Micro-Controller 30 dies dem Funktionsblock Überwachung 21 mit. Der Funktionsblock Überwachung 21 wiederum unterbricht mittels Sicherungsrelais 22 die Plus leitung 18 für die elektromagnetischen Ventile 16. Über die Zusatzeinrichtung 25 kann über die Leitungen 18A bzw. 19A die Kupplung E aktiviert werden. Die Zusatzeinrichtung 25 kann als Schalter, Transistor oder Relais ausgeführt sein. Eine zweite Lösungsmöglichkeit besteht darin, daß die Zusatzeinrichtung 25 über ein Diagnosegerät 28 aktiviert wird.

### Bezugszeichen

- 1: Automatgetriebe
- 2: Antriebswelle
- 3: hydrodynamischer Wandler
- 4: Pumpenrad
- 5: Turbinenrad
- 6: Leitrad
- 7: Getriebeeingangswelle
- 8: zusammengesetztes
Planetenschaltgetriebe
- 9: erster Planetenradsatz
- 10: zweiter Planetenradsatz
- 11: Welle
- 12: Welle
- 13: Differential
- 14: Achshalbwelle
- 15: Achshalbwelle
- 16: elektromagnetische Stellglieder
- 17: Kabelbaum
- 18: Plusleitung
- 19: Rückleitung
- 20: elektronisches Steuergerät
- 21: Funktionsblock Überwachung
- 22: Sicherungsrelais
- 23: Funktionsblock Endstufen
- 24: Eingangsgrößen
- 25: Zusatzeinrichtung
- 26: U-Bat
- 27: Masse
- 28: Diagnosegerät
- 29: Datenbus
- 30: Micro-Controller
- B: erste Kupplung
- E: zweite Kupplung
- C: erste Bremse
- D: zweite Bremse
- F: dritte Bremse

## Patentansprüche

1. Automatgetriebe (1), dessen Übersetzung über Kupplungen und Bremsen auswählbar ist, hierbei die Kupplungen und Bremsen des Automatgetriebes (1) über elektromagnetische Stellglieder (16) von einem elektronischen Steuergerät (20) steuerbar sind, das elektronische Steuergerät (20) aufgrund von Eingangssignalen (24) den fehlerfreien Zustand der im Kraftfluß liegenden Kupplungen/Bremsen überwacht und bei Fehlererkennung nur diejenigen Übersetzungen zuläßt, bei denen keine fehlerbehaftete Kupplung/Bremse aktiviert ist, dadurch **gekennzeichnet,** daß bei Fehlererkennung einer auf einer Getriebeeingangswelle (7) angeordneten ersten Kupplung (B) mittels einer zusätzlichen Einrichtung (25) die elektromagnetischen Stellglieder (16) einer zur ersten parallelen zweiten Kupplung (E) aktiviert werden und wobei die zusätzliche Einrichtung als Schalter oder Transistor oder Relais ausgeführt ist.

2. Einrichtung nach Anspruch 1, dadurch **gekennzeichnet,** daß die zusätzliche Einrichtung (25) mittels eines elektronischen Diagnosegeräts (28) schaltbar ist.

## Claims

1. Automatic transmission (1), the transmission ratio of which is selectable by means of clutches and brakes, said clutches and brakes of the automatic transmission (1) being controllable via electromagnetic actuators (16) by an electronic control unit (20), the electronic control unit (20) on the basis of input signals (24) checking the faultless condition of the clutches/brakes lying in the power flux and, upon detection of a fault, permitting only transmission ratios in which no defective clutch/brake is activated, characterized in that upon detection of a fault in a first clutch (B) disposed on a transmission input shaft (7), the electromagnetic actuators (16) of a second clutch (E) parallel to the first are activated by means of an additional device (25), the additional device preferably taking the form of a switch or transistor or relay.

2. Device according to claim 1, characterized in that the additional device (25) is operable by means of an electronic diagnostic unit (28).

## Revendications

1. Boîte de vitesses automatique (1) dont le rapport est sélectionnable au moyen d'embrayages et de freins, où les embrayages et freins de la boîte de vitesses automatique (1) peuvent être commandés au moyen d'éléments de réglage (16) électromagnétiques par un organe de commande électronique (20), l'organe de commande électronique (20) surveillant par des signaux d'entrée (24) l'état sans défauts des embrayages/freins se trouvant dans le flux de forces et autorisant en cas de détection de défaut seulement les rapports pour lesquels aucun embrayage/frein présentant de défaut n'est activé, **caractérisée** en ce qu'en cas de détection de défaut sur un premier embrayage (B) situé sur l'arbre d'entrée (7) de la transmission, un dispositif supplémentaire (25) active les éléments de réglage (16) électromagnétiques d'un deuxième embrayage (E) parallèle au premier, et dans lequel le dispositif supplémentaire est réalisé par un actionneur, un transistor ou un relais.

2. Dispositif selon la revendication 1, **caractérisée** en ce que le dispositif supplémentaire (25) peut être commandé au moyen d'un appareil de diagnostic électronique (28).
